Europäisches Patentamt

European Patent Office

Office européen des brevets

(11) Publication number: **0 533 949 A1**

## EUROPEAN PATENT APPLICATION
### published in accordance with Art. 158(3) EPC

(21) Application number: 92907996.0

(22) Date of filing: 03.04.92

(86) International application number:
PCT/JP92/00418

(87) International publication number:
WO 92/18294 (29.10.92 92/27)

(51) Int. Cl.⁵: B25J 9/10, B25J 19/02

(30) Priority: 09.04.91 JP 104601/91

(43) Date of publication of application:
31.03.93 Bulletin 93/13

(84) Designated Contracting States:
DE GB SE

(71) Applicant: **KABUSHIKI KAISHA YASKAWA DENKI**
**2-1, Kurosaki-shiroishi, Yahatanishi-ku Kitakyushu-shi, Fukuoka 806(JP)**

(72) Inventor: **TOUNAI, Shuichi Kabushiki Kaisha**

**Yaskawa Denki**
**2-1, Kurosaki-Shiroishi Yahatanishi-ku**
**Kitakyushu-shi Fukuoka 806(JP)**
Inventor: **YAMAMOTO, Minoru Kabushiki**
**Kaisha Yaskawa Denki**
**2-1, Kurosaki-Shiroishi Yahatanishi-ku**
**Kitakyushu-shi Fukuoka 806(JP)**

(74) Representative: **Müller-Boré & Partner**
**Patentanwälte**
**Isartorplatz 6 Postfach 26 02 47**
**W-8000 München 2 (DE)**

(54) **CALIBRATION SYSTEM FOR INDUSTRIAL ROBOT.**

(57) A calibration system for an industrial robot capable of carrying out calibration in a short time. A calibration device (3) having a six-axis degree-of-freedom-of-motion and also having displacement detecting devices provided for respective degrees of freedom is mounted on a reference surface (1p) provided on a robot (1) itself or a reference surface where a positional relationship with the robot is already known, and the leading end portion of the calibration device (3) is mechanically coupled to the leading end portion of the wrist of the robot, whereby the position data/attitude data obtained from the displacement detecting devices of the calibration device (3) are calculated back to the position data/attitude data of the robot for calibration of the robot.

FIG. 1

[FIELD OF ART]

The present invention relates to a method of calibrating an industrial robot.

[BACKGROUND OF THE INVENTION]

The conventional calibration operation involves the following steps (1)-(5) as described in Japanese Patent Laid-Open No. 148173/1987:

(1) A calibrating jig mounted to a robot is attached to the flange at the front end of the wrist of the robot.

(2) A stationary calibrating jig is placed in position.

(3) The robot is moved close to a fixed position at which the calibration can be made.

(4) The robot is moved slightly so that all the readings of the measuring instruments mounted to the stationary calibrating jig indicate 0.

(5) The position at which all the readings of the six measuring instruments indicate 0 is registered as a predetermined position and posture of the robot.

In the conventional method, the step (4) described above has the disadvantage of being both very difficult to perform and time-consuming, because the operator moves the robot in a stepwise fashion, using a teaching box.

Accordingly, the present invention is intended to provide a quick method of calibrating a robot.

Japanese Patent Laid-Open No. 245108/1989 discloses a technique for calibrating the operation position of a positioning robot relative to an apparatus. In this technique, a measuring robot independent of a working robot is used, and only the position of the front end of a tool is controlled and calibrated. The calibration of the positional relations among the various axes of the robot at which the present invention is directed is not performed by this technique.

[DISCLOSURE OF THE INVENTION]

A method of calibrating a robot in accordance with the present invention comprises the steps of: mounting a calibrating device having 6 degrees of freedom to a reference surface which is established on the robot or has a known positional relation to the robot, the calibrating device having a displacement detector for each of 6 axes; mechanically coupling the front end of the calibrating device to the front end of the wrist of the robot; calculating the position and the posture of the robot from data derived from the displacement detectors, the data indicating the position and the posture of the calibrating device; and calibrating the robot according to the calculated position and posture.

If the front end of the calibrating device has been mechanically coupled to the front end of the wrist of the robot, then the front end of the wrist agrees in position and posture with the front end of the calibrating device. Since the calibrating device has been mounted on the reference surface of the robot, the position and the posture of the front end of the calibrating device relative to the reference surface of the robot are determined from the data produced by the displacement detectors of the calibrating device and from the mechanical time constant of the calibrating device. That is, data about the position and the posture of the front end of the wrist of the robot is found.

In accordance with the present invention, any kind of robot can be calibrated with relatively simple operations. Other objects and features of the invention will appear in the course of the description thereof which follows.

[BRIEF DESCRIPTION OF DRAWINGS]

Fig. 1 is a schematic side elevation of a robot and a calibrating device for carrying out a method according to the invention;

Fig. 2 is an enlarged side elevation of the jigs shown in Fig. 1;

Fig. 3 is a block diagram of the electrical system shown in Fig. 1;

Figs. 4 - 6 are flowcharts illustrating the processing performed by a CPU included in the electrical system shown in Fig. 3.

[DESCRIPTION OF THE PREFERRED EMBODIMENT]

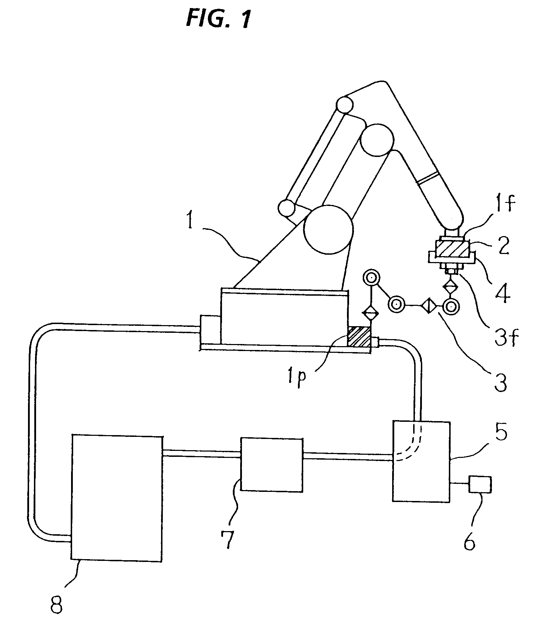

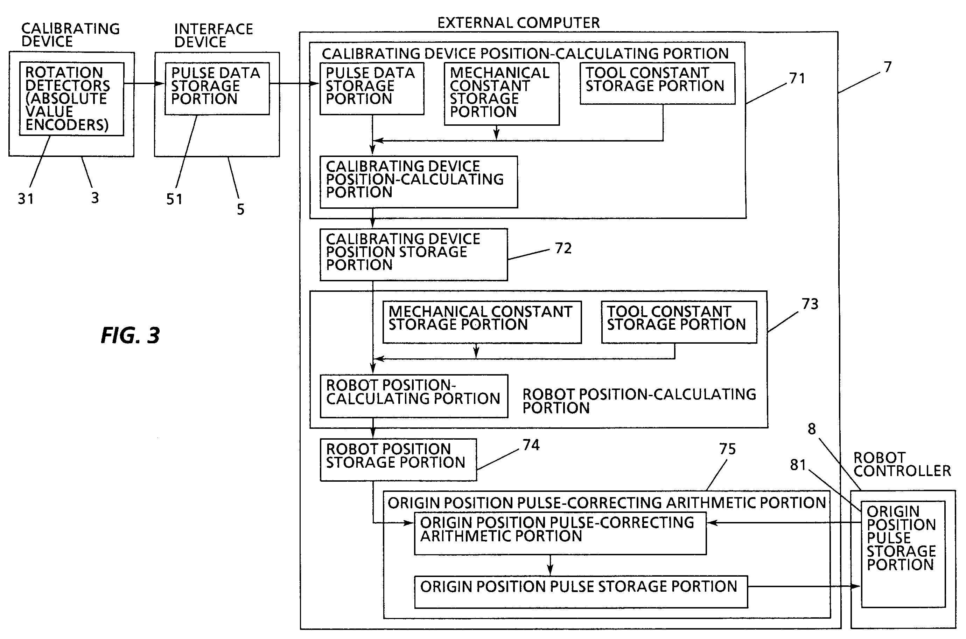

An example of the invention is next described in detail by referring to Figs. 1 and 3. First, machines needed to embody the present invention are described.

A vertical articulated robot is indicated by numeral 1, and pulses indicating the position of the origin of the robot should be corrected, i.e., this robot 1 should be calibrated. This robot 1 has a wrist with a flange surface 1f. A jig 2 is mounted to this flange surface 1f.

A calibrating device 3 takes the form of a manipulator which can be manually moved into any desired position with several degrees of freedom. A rotation detector (31 in Fig. 3) such as an absolute value encoder which detects rotation about each axis is mounted on each said axis. Each rotation detector 31 is connected with an interface control board 5. Preferably, the axes of the calibrating device 3 comprise 6 degrees of freedom (6 axes) including three degrees of freedom (3 axes) determining position and three degrees of freedom (3 axes) determining posture. However, no limitations are imposed on the structure of this calibrating device 3. Fig. 1 is a skeleton diagram of an example of a calibrating device having 6 axes of rotation.

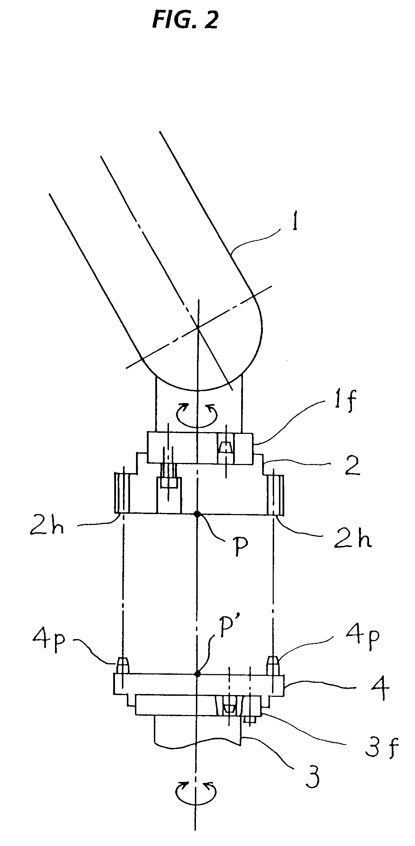

Another jig 4 is mounted to the flange surface 3f at the front end of the calibrating device 3. This jig 4 has positioning pins 4p as shown in Fig. 2, and can be coupled to the aforementioned jig 2 having pin holes 2h. When the jigs are coupled, the control point P of the robot agrees in position with the front end point P' of the calibrating device. Also, the robot and the calibrating device coincide with each other in posture.

In the example of Fig. 1, the calibrating device 3 is mounted to the reference surface 1p of the robot 1. If the positional relation between the surface to which the calibrating device 3 is mounted and the robot 1 is known, then it is not always necessary that this surface be on the body of the robot.

The interface control board 5 of the robot 1 has a switch 6. When this switch 6 is turned on, data in the form of pulses from the rotation detectors 31 of the calibrating device 3 are sampled and temporarily stored in a pulse data storage portion (51 in Fig. 3) included in the interface control board 5. This board 5 sends out the sampled pulse data under instructions from an external computer 7.

A robot controller 8 sends pulses indicating the position of the origin of the robot 1 to the external computer 7 under instructions from this external computer 7. This external computer 7 has a calibrating device position-calculating portion 71, a robot position-calculating portion 73, a calibrating device position storage portion 72, and a robot position storage portion 74 (Fig. 3). The calibrating device position-calculating portion 71 and the robot position-calculating portion 73 of the external computer 7 create positions used to calibrate the position of the origin of the robot 1 from the pulse data received from the interface control board 5. The computer 7 further includes an origin position pulse-correcting arithmetic portion 75. This correcting arithmetic portion 75 calibrates the pulse data indicating the position of the origin of the robot 1 according to the robot position stored in the robot position storage portion 74 and according to the origin position pulses received from an origin position pulse storage portion 81 included in the robot controller 8. The calibrated pulses indicating the position of the origin are routed to the origin position pulse storage portion 81 under instructions from this external computer 7. The novel method is carried out in the sequence described below.

(1) First, the calibrating device 3 is mounted either to a reference surface 1p established on the robot 1 or to a reference surface having a known positional relation to the robot 1.

(2) The jig 4 is mounted to the flange surface 3f of the calibrating device 3.

(3) The jig 2 is mounted to the flange surface 1f of the robot 1.

(4) The robot is moved close to a desired position so that the jigs 2 and 4 can be coupled.

(5) The calibrating device 3 is moved manually to couple the jigs 2 and 4.

(6) Under this condition, if the external computer issues an instruction for sampling data, then the external computer receives pulse data, or position data, indicating the position of the calibrating device from the absolute encoders mounted on the axes, respectively, of the calibrating device via the interface control board.

After the position data is received, if the external computer issues an instruction for performing calculations needed for calibration, then the following calculations are performed for said calibration.

Let $A_i$ ($i$ = 1 to 6) be the simultaneous transformation between the manipulator having 6 degrees of freedom and each link. The posture $T_{6c}$ of the calibrating device is given by the product of the matrices of $A_i$'s. Thus, we have

$$T_{6c} = A_1 \cdot A_2 \cdot A_3 \cdot A_4 \cdot A_5 \cdot A_5$$

Let Z be the transformation matrix between the reference coordinates of the calibration device and the reference coordinates of the robot. The posture $T_{6c1}$ of the calibration device expressed in terms of the reference coordinates of the robot is given by

$$T_{6c1} = Z \cdot T_{6c}$$

where $Z$ = Trans (X, Y, Z)

Let E be the transformation matrix of the jig 4 to the six links. The posture $T_6$ of the calibration device 3 at the control point P is given by

$$T_6 = T_{6c1} \cdot E = Z \cdot T_{6c} \cdot E$$

where

$$E = \begin{bmatrix} n_{xt} & o_{xt} & a_{xt} & X_t \\ n_{yt} & o_{yt} & a_{yt} & Y_t \\ n_{zt} & o_{zt} & a_{zt} & Z_t \\ 0 & 0 & 0 & 0 \end{bmatrix}$$

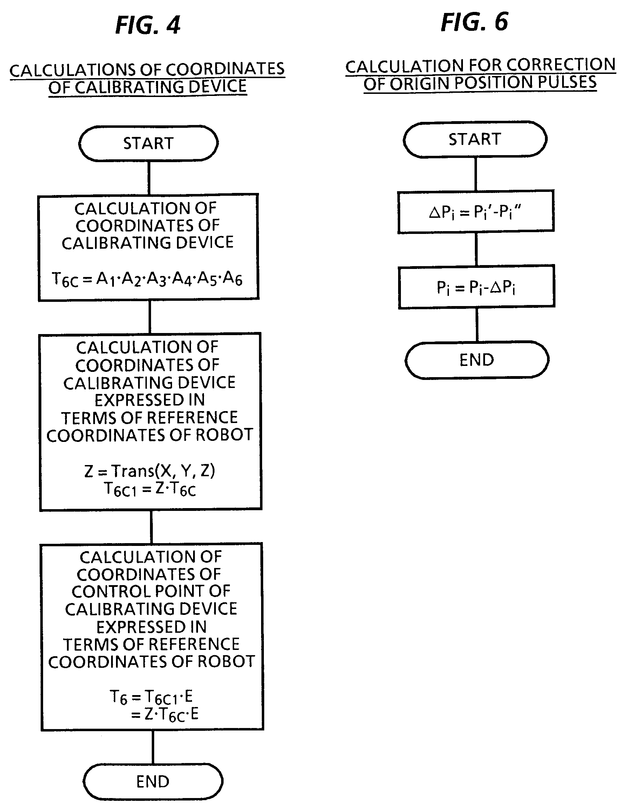

The processing described thus far is illustrated in the flowchart of Fig. 4. The orthogonal coordinates of the control point of the calibrating device are calculated from this posture $T_6$. These coordi-

nates are the same as the coordinates of the control point of the robot. Letting $T_{6P}$ be the position of the control point of the robot assumed at this time, we have the following relations:

$$T_{6P} = T_6 \, (XYZ)$$

$$T6P = \begin{bmatrix} X \\ Y \\ Z \end{bmatrix}$$

In the above equations, T6 (x y z) indicates the position data of the T6 matrix. Since the orientations, or postures, of the jigs 2 and 4 are equal, the posture $T_{6S}$ of the robot is given by

$$T_{6S} = T_6 \, (orient) \cdot Rot(X, 180°C)$$

$$T6S = \begin{bmatrix} n_x & o_x & a_x \\ n_y & o_y & a_y \\ n_z & o_z & a_z \end{bmatrix}$$

In the above equations, $T_6$(orient) indicates the posture data of the $T_6$ matrix. From the $T_{6P}$ and $T_{6S}$ found in this way, the position $T_{6M}$ of the master robot is given by the following determinant:

$$E = \begin{bmatrix} n_x & o_x & a_x & X \\ n_y & o_y & a_y & Y \\ n_z & o_z & a_z & Z \\ 0 & 0 & 0 & 1 \end{bmatrix}$$

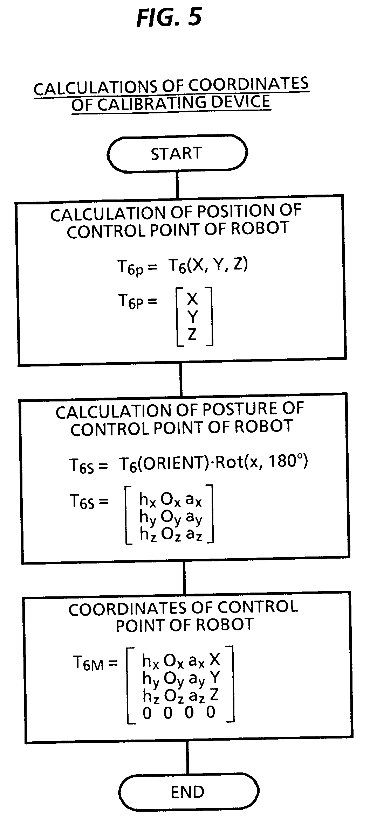

Fig. 5 is a flowchart illustrating the processing described above.

The pulse values indicating the 6 axes of the robot are found from the position $T_{6M}$ of the robot found in this way and from the data for the dimensions of the robot, the data for the mechanical constants, and the dimensions of the tool previously stored in the external computer. Let $P_i'$ be the pulse value found from this calculation.

After completing the calculations for calibration in this way, the external computer issues an instruction for correcting the pulses indicating the position of the origin to the robot controller. Then, the robot controller sends pulse data $P_i$ about the axes at the position of the origin of the robot and pulse data $P_i''$ about the axes of the robot at the present position to the external computer.

The external computer receives the pulse data from the robot controller and performs the following calculation to find differential data $\Delta P_i$ about the 6 axes:

$$\Delta P_i = P_i' - P_i''$$

The calculated data $\Delta P_i$ indicates the difference between the pulse data for the axes of the robot calculated by the external computer and the pulse data at the present position of the master robot. Using this differential data, the origin position pulses Pi about the 6 axes are corrected according to the following calculation:

$$P_i = P_i - \Delta P_i$$

The origin position pulses can be corrected according to this calculation. The origin position pulses Pi found by the above calculations are sent to the robot controller for modifying the position of the origin of the robot.

Fig. 6 is a flowchart illustrating the processing described above.

[INDUSTRIAL FEASIBILITY]

This novel calibration method can be applied to every teaching playback type industrial robot which can mechanically join the front end of a wrist to the front end of a calibrating device.

**Claims**

1. A method of calibrating a robot, comprising the steps of:
   mounting a calibrating device having 6 degrees of freedom to a reference surface which is established on the robot, the calibrating device having a displacement detector for each of 6 axes;
   mechanically coupling the front end of the calibrating device to the front end of the wrist of the robot;
   calculating the position and the posture of the robot from data derived from the displacement detectors, the data indicating the position and the posture of the calibrating device; and
   calibrating the robot according to the calculated position and posture.

2. A method of calibrating a robot, comprising the steps of:
   mounting a calibrating device having 6 degrees of freedom to a reference surface which has a known positional relation to the robot, the calibrating device having a displacement detector for each of 6 axes;

mechanically coupling the front end of the calibrating device to the front end of the wrist of the robot;

calculating the position and the posture of the robot from data derived from the displacement detectors, the data indicating the position and the posture of the calibrating device; and

calibrating the robot according to the calculated position and posture.

**FIG. 1**

## FIG. 2

EP 0 533 949 A1

**FIG. 3**

CALIBRATING DEVICE

INTERFACE DEVICE

EXTERNAL COMPUTER

```
ROTATION
DETECTORS
(ABSOLUTE
VALUE
ENCODERS)
```

31   3

```
PULSE DATA
STORAGE
PORTION
```

51   5

CALIBRATING DEVICE POSITION-CALCULATING PORTION

```
PULSE DATA
STORAGE
PORTION
```

```
MECHANICAL
CONSTANT
STORAGE
PORTION
```

```
TOOL CONSTANT
STORAGE PORTION
```

71   7

```
CALIBRATING DEVICE
POSITION-CALCULATING
PORTION
```

```
CALIBRATING DEVICE
POSITION STORAGE
PORTION
```

72

```
MECHANICAL CONSTANT
STORAGE PORTION
```

```
TOOL CONSTANT
STORAGE PORTION
```

73

```
ROBOT POSITION-
CALCULATING PORTION
```

ROBOT POSITION-CALCULATING PORTION

```
ROBOT POSITION
STORAGE PORTION
```

74

ORIGIN POSITION PULSE-CORRECTING ARITHMETIC PORTION

75

81

ROBOT CONTROLLER

```
ORIGIN
POSITION
PULSE
STORAGE
PORTION
```

```
ORIGIN POSITION PULSE-CORRECTING
ARITHMETIC PORTION
```

```
ORIGIN POSITION PULSE STORAGE PORTION
```

8

8

# FIG. 4

CALCULATIONS OF COORDINATES
OF CALIBRATING DEVICE

START

CALCULATION OF
COORDINATES OF
CALIBRATING DEVICE

$T_{6C} = A_1 \cdot A_2 \cdot A_3 \cdot A_4 \cdot A_5 \cdot A_6$

CALCULATION OF
COORDINATES OF
CALIBRATING DEVICE
EXPRESSED IN
TERMS OF REFERENCE
COORDINATES OF ROBOT

$Z = \mathrm{Trans}(X, Y, Z)$
$T_{6C1} = Z \cdot T_{6C}$

CALCULATION OF
COORDINATES OF
CONTROL POINT OF
CALIBRATING DEVICE
EXPRESSED IN
TERMS OF REFERENCE
COORDINATES OF ROBOT

$T_6 = T_{6C1} \cdot E$
$= Z \cdot T_{6C} \cdot E$

END

# FIG. 6

CALCULATION FOR CORRECTION
OF ORIGIN POSITION PULSES

START

$\triangle P_i = P_i{}' - P_i{}''$

$P_i = P_i - \triangle P_i$

END

# *FIG. 5*

CALCULATIONS OF COORDINATES
OF CALIBRATING DEVICE

$$\text{START}$$

CALCULATION OF POSITION OF
CONTROL POINT OF ROBOT

$$T_{6p} = T_6(X, Y, Z)$$

$$T_{6P} = \begin{bmatrix} X \\ Y \\ Z \end{bmatrix}$$

CALCULATION OF POSTURE OF
CONTROL POINT OF ROBOT

$$T_{6S} = T_6(\text{ORIENT}) \cdot \text{Rot}(x, 180°)$$

$$T_{6S} = \begin{bmatrix} h_x & O_x & a_x \\ h_y & O_y & a_y \\ h_z & O_z & a_z \end{bmatrix}$$

COORDINATES OF CONTROL
POINT OF ROBOT

$$T_{6M} = \begin{bmatrix} h_x & O_x & a_x & X \\ h_y & O_y & a_y & Y \\ h_z & O_z & a_z & Z \\ 0 & 0 & 0 & 0 \end{bmatrix}$$

$$\text{END}$$

# INTERNATIONAL SEARCH REPORT

International Application No PCT/JP92/00418

**I. CLASSIFICATION OF SUBJECT MATTER** (if several classification symbols apply, indicate all) [6]

According to International Patent Classification (IPC) or to both National Classification and IPC

Int. Cl[5]  B25J9/10, 19/02

**II. FIELDS SEARCHED**

| Minimum Documentation Searched [7] | |
|---|---|
| Classification System | Classification Symbols |
| IPC | B25J9/10, 19/02 |

Documentation Searched other than Minimum Documentation
to the Extent that such Documents are Included in the Fields Searched [8]

| | |
|---|---|
| Jitsuyo Shinan Koho | 1926 - 1992 |
| Kokai Jitsuyo Shinan Koho | 1971 - 1992 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 62-140783 (Fanuc Ltd.),<br>June 24, 1987 (24. 06. 87),<br>(Family: none) | 1 |
| A | JP, A, 63-318275 (Fujitsu Ltd.),<br>December 27, 1988 (27. 12. 88),<br>(Family: none) | 1, 2 |
| A | JP, A, 63-011289 (Hitachi, Ltd.),<br>January 18, 1988 (18. 01. 88),<br>(Family: none) | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 14, 1992 (14. 05. 92) | June 23, 1992 (23. 06. 92) |
| International Searching Authority | Signature of Authorized Officer |
| Japanese Patent Office | |

Form PCT/ISA/210 (second sheet) (January 1985)